# EUROPÄISCHE PATENTSCHRIFT

(11) **EP 1 769 940 B1**
(45) Veröffentlichungstag und Bekanntmachung des Hinweises auf die Patenterteilung: **28.11.2012**
(21) Anmeldenummer: 06121356.7
(22) Anmeldetag: 27.09.2006
(51) Int. Cl.: B60B 37/04, B60B 37/06

(54) **Laufradwelle mit mindestens einem darauf festsitzenden Laufrad für Schienenfahrzeuge**
Carrying axle for rail vehicle with at least one wheel rigidly attached
Essieu porteur pour véhicule ferroviare avec au moins une roue calée

(30) Priorität: 28.09.2005 DE 102005046595
(43) Veröffentlichungstag der Anmeldung: 04.04.2007
(73) Patentinhaber: Bochumer Verein Verkehrstechnik GmbH, 44793 Bochum (DE)
(72) Erfinder: Murawa, Franz, 44805, Bochum (DE); Winkler, Marlies, 44791, Bochum (DE)
(74) Vertreter: Cohausz & Florack

(56) Entgegenhaltungen:
- CH-A- 288 060
- DE-A1- 2 043 079
- DE-A1- 2 363 403
- DE-C- 806 970
- DE-C- 833 201
- JP-A- 2001 206 002

## Beschreibung

Die Erfindung betrifft eine Laufradwelle aus höherfestem Stahl für Schienenfahrzeuge, mit mindestens einem durch einen radial wirkenden Presssitz auf der Welle dreh- und axialfest gehaltenen Laufrad.

Dokument JP-A-2001 206 002 beschreibt eine Welle nach dem Oberbegriff des Anspruchs 1.

Im Schienenfahrzeugbau werden Laufradwellen dieser Art in verschiedenen Ausführungen eingesetzt. Sie können mit einem oder zwei Laufrädern bestückt sein. Darüber hinaus können sie mit weiteren Funktionselementen, insbesondere Bremsscheiben, bestückt sein. Die Wellen sind entweder an den Innenseiten oder Außenseiten des bzw. der Räder am Fahrzeug gelagert. Da die Laufräder drehfest auf den Wellen angeordnet sind, kann die Welle auch als Antriebswelle (Radsatzwelle) fungieren. In diesem Fall ist sie zusätzlich mit einem Zahnrad oder einem Kupplungsflansch bestückt und an das Getriebe des Schienenfahrzeuges angekuppelt.

Die an solche Laufradwellen gestellten Anforderungen sind vielfältig und hoch. Eine Anforderung besteht darin, dass die Laufradwellen möglichst leichtgewichtig sein sollen. Um dies zu erreichen, können die Wellen hohl ausgebildet sein. Darüber hinaus kann beim Einsatz von höherfestem Stahl der Durchmesser der Welle gegenüber Wellen aus Normalstahl kleiner sein. Dem Einsatz höherfester Stähle sind allerdings Grenzen gesetzt, weil die bei Laufradwellen wegen der dynamischen Wechselbeanspruchung der Wellen im Betrieb wichtige Ermüdungsfestigkeit mit einer Steigerung der Kerbempfindlichkeit einhergeht, womit die Ermüdungsfestigkeit nicht in gleichem Maße wie die möglichen Festigkeitssteigerungen der höherfesten Stähle zunimmt. Auch sind einer Verbesserung der Ermüdungsfestigkeit durch Oberflächenverfestigung der Wellen, insbesondere durch mechanische Verfahren, wie Hartgussstrahlen oder Schleifhärten oder thermische Verfahren, wie Induktiv- oder Laserhärtung, oder durch chemisch-thermische Verfahren, wie Nitrieren, Einsatzhärten oder Nitrocarborieren Grenzen gesetzt. Bei Untersuchungen an Radsatzwellen nach langen Betriebseinsätzen, die bei Rädern bis zum Erreichen der Verschleißgrenze bis zu ca. 2 Mio.km und bei Radsatzwellen in Abhängigkeit von der Fahrzeuglebensdauer sogar bis zu 15 Mio.km betragen können, wurde festgestellt, dass die Ermüdungsfestigkeit der Laufradwelle weit hinter den ursprünglichen Erwartungen zurückbleibt.

Der Erfindung liegt die Aufgabe zugrunde, eine gewichtsoptimierte Laufradwelle zu entwickeln, deren Ermüdungsfestigkeit gegenüber den aus der Praxis bekannten Laufradwellen erhöht ist.

Diese Aufgabe wird bei einer Laufradwelle der eingangs genannten Art durch die kennzeichnenden Merkmale des Anspruchs 1 gelöst.

Bei der erfindungsgemäßen Laufradwelle kommt es im Vergleich zu Laufradwellen ohne die erfindungsgemäßen Maßnahmen nicht zu der betriebsbedingten starken Verminderung der Ermüdungsfestigkeit, die nach Untersuchungen ihre Ursache darin hat, dass es an den Presssitzen wegen der aufgrund der dynamischen Belastung der Welle nicht zu vermeidenden Relativbewegungen zwischen der Welle und der Nabe des Laufrades zu Reibkorrosion kommt, die im weiteren Verlauf zur Ausbildung von Grübchen mit anschließender Anrissbildung führen kann. Hinzu kommt, dass sich die erfindungsgemäßen Maßnahmen realisieren lassen, ohne dass dadurch die Gewichtsoptimierung der Laufradwelle mit dem oder den darauf gehaltenen Laufrädern beeinträchtigt wird.

Vorzugsweise hat die oberflächengehärtete Randschicht eine Dicke von 0,01 bis 15 mm. Für die Oberflächenverfestigung können die vorerwähnten bekannten Verfahren Verwendung finden.

Um die Haftung der chemisch passiven Schutzschicht auf der Randschicht zu verbessern, kann die Randschicht an ihrer Oberfläche aufgeraut sein.

Als chemisch passive Schutzschicht eignet sich eine Mineral-, insbesondere Keramikschicht, oder eine Phosphatschicht oder eine Metallschicht. Insbesondere ist wegen ihrer guten Gleiteigenschaften eine Molybdänschicht geeignet. Für das Aufbringen der chemisch passiven Schutzschicht eignen sich verschiedene Verfahren. Insbesondere ist das Flammspritzen geeignet.

Vorzugsweise ist die Randschicht nitriert. In diesem Fall kann sie zur Verbesserung des Korrosionsverhaltens bzw. der Haftung der Schutzschicht an ihrer Oberfläche in einer Tiefe von bis zu 25 bis 35% in Oxinitrid umgewandelt sein.

Wie das Laufrad, können auf der Welle auch andere Funktionselemente, insbesondere eine Bremsscheibe, mit Presssitz gehalten sein.

Laufradwellen werden im Betrieb nicht nur aufgrund der Gleitbewegungen im Presssitz zwischen der Welle und dem Laufrad, und gegebenenfalls anderen Funktionselementen, hinsichtlich der Ermüdungsfestigkeit beansprucht, sondern auch durch aus dem Schotterbett zwischen den Schienen aufgewirbelte Schottersteine. Um die Welle auf ihrer freien Oberfläche davor zu schützen, kann sie mit einem stoßenergiedämpfenden Überzug beschichtet sein. Vorzugsweise besteht dieser Überzug aus mehreren PU-Lagen.

Im Folgenden wird die Erfindung anhand einer ein Ausführungsbeispiel darstellenden Zeichnung näher beschrieben. Im einzelnen zeigen:

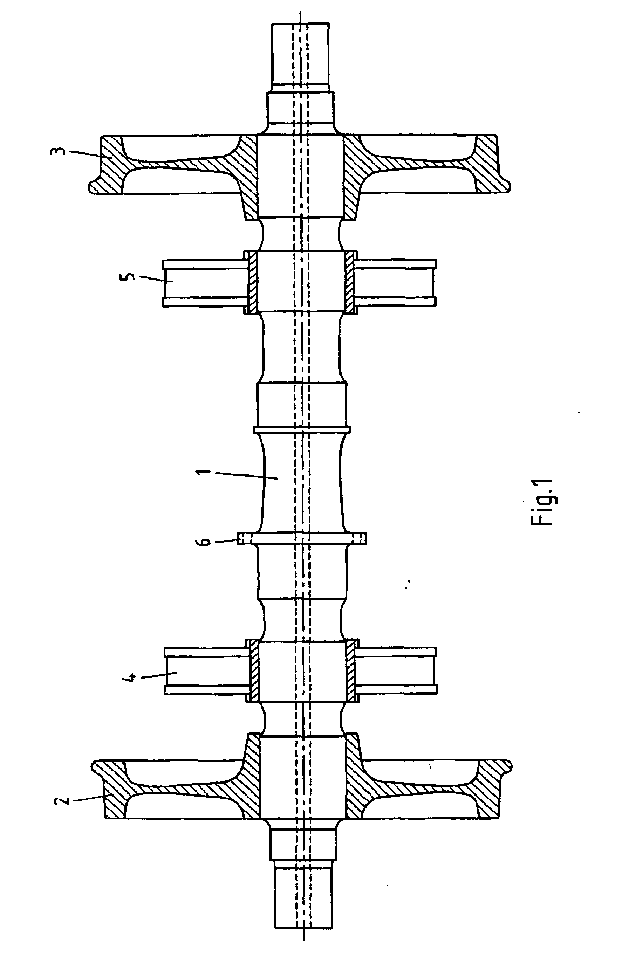

- Fig. 1: eine angetriebene Laufradwelle (Radsatzwelle) mit darauf fest sitzenden Laufrädern und Bremsscheiben im Axialschnitt und
- Fig. 2: einen Presssitz eines Laufrades auf der Welle gemäß Fig. 1 im Ausschnitt in vergrößerter Darstellung.

Auf einer hohlen Laufradwelle 1 für Schienenfahrzeuge sitzen mit radial wirkendem Presssitz zwei Laufräder 2, 3 und zwei Bremsscheiben 4, 5. Zwischen den Bremsscheiben 4, 5 ist ein Anschraubflansch 6 für ein nicht dargestelltes Zahnrad eines nicht dargestellten Antriebes angeschmiedet. Eine solche Laufradwelle 1 ist mit nicht dargestellten, auf den Außenseiten der beiden Laufräder 2, 3 angeordneten Lagern in Lagerböcken eines Schienenfahrzeuges gehalten. Wie der Zeichnung zu entnehmen ist, ist der Durchmesser der Laufradwelle 1 im Bereich der Laufräder 2, 3 und der Bremsscheiben 4, 5 gegenüber dem übrigen Bereich bis auf einen Bereich neben dem Anschraubflansch 6 vergrößert. Die Laufradwelle 1 besteht aus einem höherfesten Stahl, wie z.B. 25CrMo4, 26CrNiMoV145, 30CrNiMoV12, 34CrNiMo6.

Jedes Laufrad 2, 3 und jede Bremsscheibe 4, 5 sind durch einen radial wirkenden Presssitz dreh- und axialfest auf der Welle 1 gehalten.

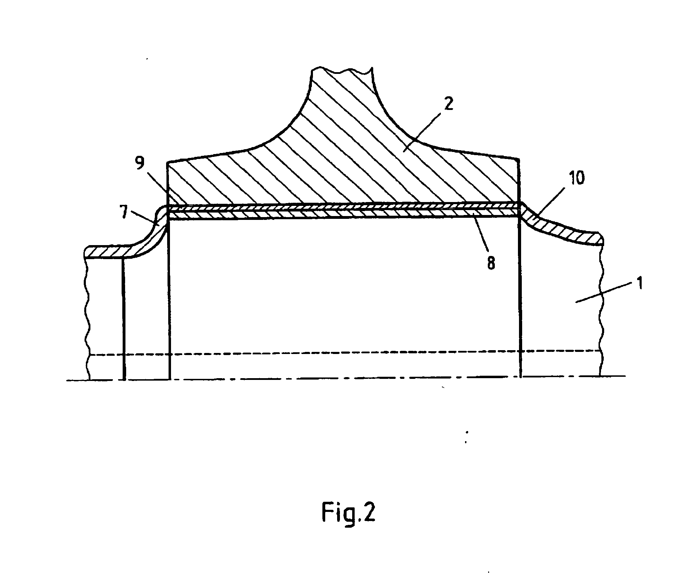

Der in Fig. 2 in vergrößerter Darstellung dargestellte Presssitz ist durch eine Reihe von Besonderheiten gekennzeichnet. Um diesen Aufbau besser darstellen zu können, sind die einzelnen Merkmale allerdings nicht maßstabgerecht dargestellt. Im Bereich des Presssitzes weist die Welle 1 eine außenseitige Randschicht 7 auf, die bei einem Wellendurchmesser im Bereich des Presssitzes von ca. 200 mm eine Dicke von 0,01 bis 15 mm hat. Diese Randschicht 7 ist oberflächengehärtet/-verfestigt. Sie kann sich über die Bereiche der Presssitze hinaus erstrecken. Die Oberflächenhärtung/verfestigung kann eine mechanische, thermische oder chemische oder daraus kombinierte Behandlung sein. Durch sie wird die Ermüdungsfestigkeit gegenüber einer unbehandelten Welle um mindestens 10% gesteigert. Sofern die Oberflächenhärtung der Randschicht 7 durch Nitrieren erfolgt, kann die Nitridschicht in einer Tiefe von bis etwa 1/3 in Oxinitrid umgewandelt werden, um die Korrosionsbeständigkeit der Randschicht 7 zu verbessern. Zur Verbesserung der Haftfähigkeit der Oberfläche der Randschicht 7 empfiehlt es sich auch, vor oder nach der der Oberflächenhärtung dienenden Behandlung die Randschicht 7 an der Oberfläche 8 aufzurauen. Sofern die Oberflächenhärtung / Oberflächenverfestigung durch mechanische Verfahren, wie Hartgussstrahlen oder Schleifhärten erfolgt, die mit einer Aufrauung verbunden ist, erübrigt sich natürlich eine zusätzliche Behandlung. Auf die oberflächengehärtete Randschicht 7 wird dann eine chemisch passive Schutzschicht 9 aufgebracht, deren Dicke weniger als 1/50 des Durchmessers der Welle 1 im Bereich des Presssitzes beträgt. Diese Schutzschicht 9 kann eine Mineral-, insbesondere Keramikschicht, Phosphatschicht oder eine Metallschicht sein. Insbesondere ist Molybdän wegen seiner guten Gleiteigenschaften geeignet. Ein geeignetes Auftragsverfahren dieser Stoffe ist das Flammspritzen, weil dieses Auftragsverfahren das Auftragen einer dünnen fest haftenden Schicht gewährleistet. Allerdings sind auch andere Auftragsverfahren denkbar.

Nach Fertigstellung der Presssitze auf der Welle 1 wird die Welle 1 an ihrer übrigen freien Oberfläche mit einem stoßenergiedämpfenden Überzug 10 aus PU-Material beschichtet. Vorzugsweise besteht dieser Überzug 10 aus mindestens drei Lagen. Die Gesamtdicke sollte mindestens 3,5 mm betragen, wobei die einzelnen Lagen nicht größer als 1 mm sein sollten. Durch diesen Aufbau wird die Dämpfungswirkung und die Haltbarkeit verbessert.

Nachdem die Welle 1 mit ihren verschiedenen Presssitzen und dem dämpfenden Überzug 10 fertiggestellt ist, können die Laufräder 2, 3 und die Scheibenbremsen 4, 5 mit an sich bekannten Techniken zum Aufschrumpfen von Rädern an ihren Presssitzen aufgebracht werden.

## Patentansprüche

1. Laufradwelle aus höherfestem Stahl für Schienenfahrzeuge mit mindestens einem durch einen radial wirkenden Presssitz auf der Welle (1) dreh- und axialfest gehaltenen Laufrad (2, 3), wobei die außenseitige Randschicht (7) der Welle (1) mindestens im Bereich des Presssitzes oberflächengehärtet/-verfestigt ist , **dadurch gekennzeichnet, dass** auf der oberflächengehärteten/- verfestigten außenseitigen Randschicht der Welle eine chemisch passive Schutzschicht (9) mit einer Dicke von weniger als 1/50 des Durchmessers des Presssitzes festhaftend aufgebracht ist.

2. Laufradwelle nach Anspruch 1, **dadurch gekennzeichnet, dass** die oberflächengehärtete Randschicht (7) eine Dicke von 0,01 bis 15 mm hat.

3. Laufradwelle nach Anspruch 1 oder 2, **dadurch gekennzeichnet, dass** die Randschicht (7) an ihrer Oberfläche (8), auf der die chemisch passive Schutzschicht (9) aufgebracht ist, aufgeraut ist.

4. Laufradwelle nach einem der Ansprüche 1 bis 3,
**dadurch gekennzeichnet, dass** die chemisch passive Schutzschicht (9) eine Mineral-, insbesondere Keramikschicht, oder eine Phosphatschicht oder eine Metallschicht ist.

5. Laufradwelle nach einem der Ansprüche 1 bis 4,
**dadurch gekennzeichnet, dass** die Randschicht (7) nitriert ist.

6. Laufradwelle nach Anspruch 5, **dadurch gekennzeichnet, dass** die nitrierte Randschicht (7) an ihrer Oberfläche in einer Tiefe von bis zu 25 bis 35% in Oxinitrid umgewandelt ist.

7. Laufradwelle nach einem Ansprüche 1 bis 6, **dadurch gekennzeichnet, dass** auf der Welle (1) mindestens ein weiteres Funktionselement (4, 5) wie das Laufrad (2, 3) gleichartig gehalten ist.

8. Laufradwelle nach einem Ansprüche 1 bis 6, **dadurch gekennzeichnet, dass** die Welle auf ihrer freien Oberfläche mit einem Stoßenergie dämpfenden Überzug beschichtet ist.

9. Laufradwelle nach Anspruch 8, **dadurch gekennzeichnet, dass** der Überzug aus mehreren PU-Lagen besteht.

## Claims

1. Bogie wheel shaft made of high-strength steel for rail vehicles with at least one bogie wheel (2, 3) held in a torque-proof and axially fixed manner on the shaft (1) by a radially acting press fit, wherein the outside edge layer (7) of the shaft (1) is surface-hardened/surface-strengthened at least in the region of the press fit, **characterised in that** a chemically passive protective layer (9) is applied adhesively in a thickness of less than 1/50 of the diameter of the press fit to the surface hardened/surface-strengthened outside edge layer of the shaft.

2. Bogie wheel according to claim 1, **characterised in that** the surface-hardened edge layer (7) has a thickness of 0.01 to 15 mm.

3. Bogie wheel according to claim 1 or 2, **characterised in that** the edge layer (7) is roughened on its surface (8) to which the chemically passive protective layer (9) is applied.

4. Bogie wheel according to one of claims 1 to 3, **characterised in that** the chemically passive protective layer (9) is a mineral layer, in particular ceramic layer, or a phosphate layer or a metal layer.

5. Bogie wheel according to one of claims 1 to 4, **characterised in that** the edge layer (7) is nitrided.

6. Bogie wheel according to claim 5, **characterised in that** the nitrided edge layer (7) is converted on its surface into oxynitride to a depth of up to 25 to 35%.

7. Bogie wheel according to one of claims 1 to 6, **characterised in that** at least one further functional element (4, 5) is similarly held like the bogie wheel (2, 3) on the shaft (1).

8. Bogie wheel according to one of claims 1 to 6, **characterised in that** the shaft is coated on its free surface with a coating that absorbs impact energy.

9. Bogie wheel according to claim 8, **characterised in that** the coating consists of a plurality of PU layers.

## Revendications

1. Essieu porteur en acier à résistance élevée pour véhicules ferroviaires, avec une roue porteuse (2, 3) maintenue solidaire en rotation et axialement sur l'essieu (1) par un ajustage serré, qui agit radialement, sachant que la couche de bord extérieure (7) de l'essieu (1) est durcie / renforcée en surface, au moins dans la région de l'ajustage serré, **caractérisé en ce que**, sur la couche de bord extérieure (7) de l'essieu, durcie /renforcée en surface, une couche de protection (9) chimiquement passive, d'une épaisseur inférieure à 1/50 du diamètre de l'ajustage serré, est appliquée de manière adhérente.

2. Essieu porteur selon la revendication 1, **caractérisé en ce que** la couche de bord (7) est d'une épaisseur de 0,01 à 15 mm.

3. Essieu porteur selon revendication 1 ou 2, **caractérisé en ce que** la surface (8) de la couche de bord (7), sur laquelle la couche de protection (9) chimiquement passive est appliquée, est rugueuse.

4. Essieu porteur selon l'une des revendications 1 à 3, **caractérisé en ce que** la couche de protection chimiquement passive (9) est une couche minérale, en particulier une couche de céramique ou une couche de phosphate ou une couche métallique.

5. Essieu porteur selon l'une des revendications 1 à 4, **caractérisé en ce que** la couche de bord (7) est nitrurée.

6. Essieu porteur selon la revendication 5, **caractérisé en ce que** la couche de bord (7) nitrurée est transformée, en surface, en oxynitrure, dans une profondeur allant jusqu'à 25 à 35 %.

7. Essieu porteur selon l'une des revendications 1 à 6, **caractérisé en ce qu'**au moins un autre élément fonctionnel (4, 5), comme la roue portante (2, 3), est maintenu sur l'essieu (1), de la même manière.

8. Essieu porteur selon l'une des revendications 1 à 6, **caractérisé en ce que** l'essieu est pourvu, sur sa surface libre, d'un revêtement, qui amortit l'énergie de choc.

9. Essieu porteur selon la revendication 8, **caractérisé en ce que** le revêtement est composé de plusieurs couches de PU.
